**Europäisches Patentamt**

**European Patent Office**

**Office européen des brevets**

(11) Veröffentlichungsnummer: **0 227 940**
**B1**

(12) # EUROPÄISCHE PATENTSCHRIFT

(45) Veröffentlichungstag der Patentschrift:
27.09.89

(51) Int. Cl.⁴: **G03B 42/02**, G03C 5/16

(21) Anmeldenummer: **86116168.5**

(22) Anmeldetag: **21.11.86**

(54) **Vorrichtung zur Umsetzung von in einer Speicherschicht getragenen Strahlenbildinformationen in eine elektrische Signalfolge.**

(30) Priorität: **05.12.85 DE 3543089**

(43) Veröffentlichungstag der Anmeldung:
**08.07.87 Patentblatt 87/28**

(45) Bekanntmachung des Hinweises auf die Patenterteilung:
**27.09.89 Patentblatt 89/39**

(84) Benannte Vertragsstaaten:
**DE FR**

(56) Entgegenhaltungen:
**EP-A- 0 083 085**
**EP-A- 0 131 244**
**US-A- 3 317 738**
**US-A- 3 758 197**
**US-A- 4 320 296**

**DR. OTTO-ALBRECHT NEUMÜLLER: "Römpps
Chemie-Lexikon", Band 3, 7. Auflage 1973, Seite 1959,
Franckh'sche Verlagshandlung, Stuttgart, DE**

(73) Patentinhaber: **Siemens Aktiengesellschaft,
Wittelsbacherplatz 2, D-8000 München 2(DE)**

(72) Erfinder: **Conrad, Bernhard, Dipl.-Phys., Rosenau 19,
D-8520 Erlangen(DE)**
Erfinder: **Lange, Gottfried, Dipl.-Phys., Dresdener
Strasse 38a, D-8520 Erlangen(DE)**
Erfinder: **Tressl, Günther, Dompfaffstrasse 12,
D-8526 Bubenreuth(DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Vorrichtung zur Umsetzung von in einer Speicherschicht getragenen Strahlenbildinformationen in eine elektrische Signalfolge nach dem Oberbegriff des Patentanspruchs 1. Derartige Vorrichtungen sind etwa bekannt aus der US-PS 38 59 527.

In Vorrichtungen der vorgenannten Art werden Filme, wie Röntgenaufnahmen, oder andere durchsichtige Vorlagen mittels eines Laserstrahls abgetastet. Das durch eine solche Vorlage hindurchgehende Licht wird mit einer Faseroptik aufgefangen und auf einen Fotomultiplier zur Umsetzung in elektrische Signale überführt (Querschnittswandlung). Solche Einrichtungen sind auch anwendbar bei der Ausleuchtung von in einem Speicherleuchtstoff aufgenommenen Lichtbildern, insbesondere Röntgenbildern. Die Ausleuchtung kann ebenfalls durch Abtastung mit Licht, etwa mit einem Laserstrahl, erfolgen. Das Ausleuchtlicht kann wie das bei der erstgenannten Durchstrahlung von Filmbildern über eine Faseroptik auf einen Fotomultiplier gebracht und in elektrische Signale umgesetzt werden.

Bei Fotomultipliern ändert sich die Verstärkung nach stark wechselnden einfallenden Lichtintensitäten, die durch unterschiedliche Transparenz von Filmbildern oder unterschiedlicher Intensität von Ausleuchtbildern entstehen. Man erreicht daher mit Multipliern während der Abtastung einer Vorlage nur eine Konstanz von 1 bis 2 %.

Dies läßt aber die bei einer Abtastung von Röntgenbildern angestrebten Kontraststeigerungen (Fenstertechnik), mit der sehr kleine Unterschiede der Schwärzung sichtbar gemacht werden können, nicht zu. Hierzu ist eine Konstanz der Verstärkung auf etwa 0,1 % erforderlich, damit Streifenartefakte vermieden werden. Dies ist mit Fotomultipliern nicht oder nur unter sehr großen Schwierigkeiten erreichbar, weil unter dem Einfluß des Dynodenstroms sich der Sekundäremissionskoeffizient der Dynoden und damit die Verstärkung ändert, umso mehr, je größer der Strom ist. Hält man den Strom klein (geringe MP-Hochspannung), etwa unter 0,1μA, dann ist wegen der hohen Dynamik von 1:1000 der kleinste Strom nur 0,1μA und erfordert hohen Aufwand in der Nachverstärkung.

Ein Austausch der Multiplier durch Fotodioden würde zwar die Schwankungen der Verstärkung vermeiden, man hätte jedoch wegen der zur Bildabtastung erforderlichen großen Fläche einen hohen Sperrstrom, der zur Signal-Rausch-Verschlechterung führt. Man könnte daher auch mit diesem Wandler keine sehr kleinen Intensitäten mehr nachweisen. Bei Röntgenbildern ist jedoch eine Auswertung von Schwärzungen bis etwa S = 3 sinnvoll. Die Herstellung von Fotodioden mit den bei bekannten Umsetzern erforderlichen Flächen ist überdies schwierig, weil großflächige und über die Flächen gleichmäßige Empfindlichkeiten schwer herstellbar sind.

Der Erfindung liegt die Aufgabe zugrunde, bei Vorrichtungen der eingangs genannten Art ein Detektorsystem zur Abtastung von gespeicherten Röntgenbildern anzugeben, mit dem hohe Genauigkeit über einen großen Schwärzungsbereich erreichbar ist. Diese Aufgabe wird erfindungsgemäß durch die im Kennzeichen des Anspruchs 1 angegebenen Maßnahmen gelöst. Vorteilhafte Weiterbildungen sind Gegenstände der Unteransprüche.

Durch die Verwendung eines Lichtleiterstreifens anstelle der Faseroptik und Benutzung eines Lichtkonverters (Wellenlängenschieber), d.h. in dem Streifen, der das einfallende Licht zum Wandler leitet, ist ein Stoff enthalten, der dieses Licht, das etwa von einem Argonlaser ausgeht und eine Wellenlänge von 488 nm (blau) besitzt, in gelbes Licht von 570 nm umwandelt. Durch eine gute Politur der Oberflächen kann die Eigenschaft des Streifens als Lichtleiter noch gesteigert werden. Außerdem kann durch Ankopplung des Lichtleiters an den Fotodetektor über eine Immersionsflüssigkeit oder optischen Kitt der Übergang des Lichtes verbessert werden. So ist es gelungen, bei einem 440 mm langen und einen Querschnitt von 3 mm x 10 mm aufweisenden Lichtleiter, bezogen auf die in den Streifen einfallende Lichtintensität, mindestens 10 % an seinen schmalen Enden in Fotodioden nutzbar zu machen, d.h. in elektrische Signale umzusetzen.

Bei Anordnung einer Fotodiode an jedem schmalen Ende des Lichtleiters ergibt die Fläche der beiden Fotodioden insgesamt nur etwa 2 % der Fläche des lichtleitenden Streifens. Das Verhältnis Signalstrom/Sperrstrom ist also wegen der kleineren Flächen mindestens um den Faktor 10 höher, als wenn durch eine Faseroptik das Licht auf eine große Fotodiode übertragen werden würde (dabei ist für die zu vergleichende Faseroptik eine Lichtübertragung von 50 % vorausgesetzt).

Im Rahmen der Erfindung kann die Abtastvorrichtung in üblicher Weise aufgebaut sein. Sie kann z.B. als Innen-Trommelabtaster oder als Flachbettabtaster ausgebildet sein. Dabei ist die Benutzung in Durchlichtabtastung oder Auflichtabtastung möglich. Es ist lediglich erforderlich, daß eine Vorlage in eine Folge von Lichtsignalen umgesetzt wird, die der Dichteverteilung optischer Kontraste entspricht. Diese Lichtsignale werden dann über den Lichtleiter auf Fotodioden übertragen, wo sie in die gewünschte Folge elektrischer Signale umgesetzt werden.

Die zum Transport der Lichtsignale verwendeten Lichtleiter können aus transparentem Kunststoff bestehen. Geeignet ist etwa ein Kunststoffkörper aus Acrylglas, der für eine Wellenlänge von 488 nm ausreicht, bzw. ein anderer transparenter Kunststoff, der mit fluoreszierenden Farbstoffmolekülen eingefärbt ist. Die Herstellung des in einer Abtastvorrichtung verwendeten Lichtleiters kann etwa so erfolgen, daß man von einer transparenten Kunststoffplatte ausgeht, von der ein der gewünschten Form des Lichtleiters entsprechendes Stück abgeschnitten oder -gesägt wird und das dann durch Polieren etc. eine die Lichtleitung begünstigende glatte Oberfläche erhält.

Als Wellenlängenschieber sind Fluoreszenzstoffe der Gruppe 2,5-Dioxyterephtalsäurediäthylester (blau) oder Dioxynaphtaldazin (gelb-grün) einsetzbar. Besonders günstig sind Stoffe, die auf das umzusetzende Licht gut ansprechen und die als Fluoreszenzlicht solches abgeben, das auf die benutzten Fotodioden besonders wirksam ist. Außerdem sollten sie im Material des Lichtleiters löslich sein, so daß sie auf einfache Weise gleichmäßig darin verteilt werden können.

Zur Realisierung der Erfindung sind alle Fotodioden anwendbar, die auf Licht ansprechen, das bei der Abtastung der Bildinformationen als Durchlicht oder Auflicht austritt. Günstig ist z.B. eine Fotodiode, bei der ein Laser mit 6 mW (Argon 488nm) direkt auf einer Fotodiode 1μA Strom ergibt, so daß der Summenstrom der Dioden an obigem Konverter 100 μA ist ohne Filmabsorption und bei Filmabsorption hinter Filmschleier auf 50μA und hinter einer S = 3 Absorption auf 50 nA zurückgeht.

Der Sperrstrom (Summe) von Dioden mit 0,8 cm² beträgt bei guten Grenzschichtzählern ca. 80 nA, so daß das vorgenannte Signal noch gut vom Sperrstrom unterscheidbar ist. (Der Sperrstrom kann vom Gesamtsignal abgezogen werden, sein Rauschen ist um viele Größenordnungen kleiner als er selbst. Wegen der starken Temperaturabhängigkeit des Sperrstroms sind jedoch regelmäßige Eichmessungen erforderlich, die gegebenenfalls automatisch in den Pausen zwischen zwei Abtastungen von Vorlagen erfolgen können.) Hierbei ist eine Sperrspannung von ca. 10 bis 30 V vorausgesetzt, um ein hinreichend schnelles Abklingen des Signalstroms zu erreichen. Bei Fotodioden mit Sperrspannung zum Absaugen der Ladungsträger kann man eine Anstiegszeit von 30 ns erreichen. Man liegt dann weit unter der Meßzeit pro Pixel von 1 bis 2μs, die zur Zeit für die Digitalisierung von Röntgenbildern etwa mit einem 12 oder 14 Bit ADC benötigt werden. Damit der Kontrast von 1:1000 erfaßt werden kann und die unterste Stufe gerade noch in wenige Stufen aufgelöst werden kann, sind 12 Bit = 4096 erforderlich.

Mit implantierten Fotodioden, d.h. in die eine Gegendotierung im Halbleitermaterial implantiert wird, z.B. Bor in Silizium zur Erzeugung eines p-Typ-Halbleiters, lassen sich etwa um eine Größenordnung niedrigere Sperrströme erzielen. Solche Dioden sind im Handel erhältlich.

Weitere Einzelheiten und Vorteile der Erfindung werden nachfolgend anhand der in den Figuren dargestellten Ausführungsbeispiele weiter erläutert.

In der Figur 1 ist das Übersichtsschaubild einer erfindungsgemäß ausgestalteten Vorrichtung zur Umsetzung von Strahlenbildinformationen in eine Signalfolge dargestellt,

in der Figur 2 eine Ansicht der in Figur 1 verwendeten Konverter mit trommelförmiger Anordnung der abzutastenden Vorlage (Innentrommelabtastung),

in den Figuren 3 und 4 eine Frontal- und Seitenansicht eines Konverters für flache Bildanordnung (Flachbettabtastung) und

in der Figur 5 die Draufsicht auf einen Lichtwandler, der bei der Abtastung eines flachen Bildes entsprechend Figur 3 verwendet ist.

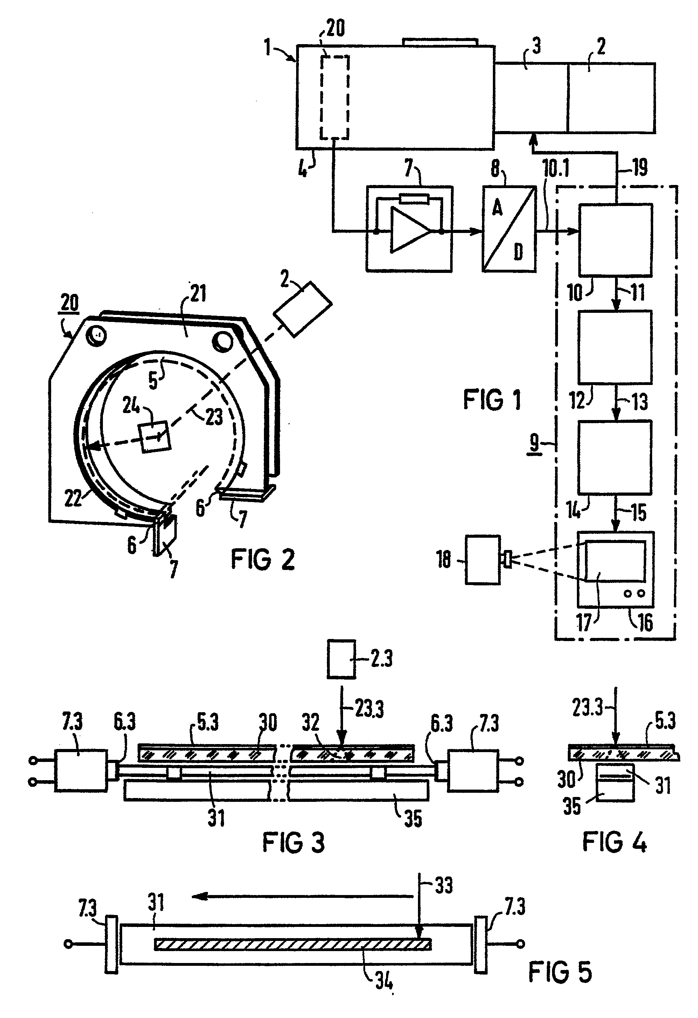

In der Figur 1 ist mit 1 eine Vorrichtung zur Umsetzung gespeicherter Bildsignale bezeichnet. Sie besteht aus einer Lichtquelle 2, die über eine Abtastvorrichtung 3 auf eine in einer Trommel 4 befestigte, als Speicherplatte dienende Folie 5 (Figur 2), d.h. eine Röntgenfilmaufnahme, geleitet wird, die eine im Durchlicht betrachtbare Verteilung unterschiedlich transparenter Stellen aufweist. Das dort ausgelöste Licht gelangt dann auf Fotodioden 6. Die von den Dioden 6 abgegebenen Signale gelangen über einen Verstärker 7, einen Analog-Digital-Wandler 8 in eine Bildverarbeitungseinrichtung 9. Letztere weist am Eingang der Leitung 10.1 vom Analog-Digital-Wandler 8 einen Mikroprozessor 10 auf. Dieser ist über eine Leitung 11 mit einem Speicher 12 verbunden, der seinerseits eine Leitung 13 zu einem Rechner 14 aufweist. Vom Rechner gelangen die Bildsignale über eine Leitung 15 auf einen Fernsehmonitor 16 und erzeugen auf dessen Bildschirm 17 ein sichtbares Bild. Dieses kann betrachtet oder etwa mit einer Kamera 18 fixiert werden. Zur Synchronisation der Abtastung der Speicherschicht der Folie 5 besteht noch eine Verbindung 19 zwischen dem Mikroprozessor 10 und der Abtastvorrichtung 3.

Die eigentliche Umsetzung in Bildsignale erfolgt in der Vorrichtung 1 in einem Konverter 20. Dieser besteht aus einer Halterung 21, die einen kreisförmigen Ausschnitt aufweist, der mit einem Radius von ca. 110 mm über die an der Trommel 20 gehalterte Folie 5 geführt werden kann. An der Innenseite des Ausschnittes liegt ein 30 mm breiter und 3 mm starker Lichtleiterstreifen 22 aus Acrylglas, das einen Fluoreszenzstoff als Wellenlängenschieber gelöst enthält. Die Folienstärke von 3 mm bildet mit dem Radius von 110 mm einen Faktor von 110:3 37. Dies übersteigt den Faktor von 20, eine Faustformel für die Krümmung von Lichtleitfasern, um Lichtverluste zu vermeiden. Bei starker Krümmung wird der Einfallswinkel auf der Außenseite zu klein und ergibt keine Totalreflexion.

Der von der Quelle 2, einem 6 mW Argon-Laser, kommende Abtaststrahl wird über einen Drehspiegel 24 umgelenkt und kann die Folie 5 durchdringen. In Abhängigkeit von der Transparenz des in der Folie 5 gespeicherten Bildes gelangen dann unterschiedliche Lichtmengen in den Lichtleiter 22. Dort wird das Licht durch den Wellenlängenschieber absorbiert, welcher Licht anderer Wellenlänge emittiert, welches zu den Fotodioden 6 geleitet wird, in welchen der in der Vorlage vorhandenen Verteilung der Transparenz entsprechende Signale erzeugt werden. Diese können über die Verstärker 7 in die Einrichtung 9 gelangen und wie oben beschrieben sichtbar gemacht werden.

Die in den Figuren 3 bis 5 dargestellte Vorrichtung zur Umsetzung gespeicherter Bildsignale unterscheidet sich von derjenigen nach der Figur 2 nur dadurch, daß das gespeicherte Bild eben angeordnet ist. Eine Speicherschicht 5.3, d.h. im Phosphoreszenzspeicherschirm des Formates 40 x 40 cm, ist gemäß Figur 3 eben auf einer durchsichtigen Glasplatte 30 gelagert. Die Fotoleiteranordnung liegt in einem Abstand von 7 mm unterhalb der Platte 30 in einer Halterung 31, die in Übereinstimmung mit der zeilenweisen Verschiebung der Abtastbewegung des Lichtstrahls 23.3 verschoben werden kann.

Der abtastende Lichtstrahl 23.3, der von einer an sich bekannten, etwa mit 2 von Figur 1 übereinstimmenden Abtastlichtquelle 2.3 kommt, löst in der Folie 5.3 Phosphoreszenzlicht aus, das, wie durch 32 in den Figuren 3 und 4 angedeutet, die Glasplatte 30 durchdringt. Das ausgelöste Licht erreicht dann, wie in der Figur 5 mitt 33 angedeutet, den eigentlichen 3 mm starken und 10 mm breiten Lichtleiter 34, der es in die Fotodioden 7.3 bringt. Die ganze Anordnung ruht auf einem Tisch 35. Die Wirkungsweise stimmt mit derjenigen der Vorrichtung nach Figur 2 überein.

## Patentansprüche

1. Vorrichtung zum Umsetzen der in einer Speicherschicht enthaltenen Bildinformationen in eine elektrische Signalfolge mit einer Fläche, der Mittel zur Befestigung der Speicherschicht zugeordnet sind, und einem auf diese Fläche gerichteten Abtastlichtstrahl (23), wobei der von diesem kommende Abtaststrahl (23) und die Fläche im Sinne einer Zeilenabtastung und eines Zeilenwechsels einander gegenüber längs und quer verschiebbar gelagert sind und die Abtastfläche mit einem fotoelektrischen Wandler (6) über einen Lichtleiter (22) in optischer Verbindung steht, dadurch gekennzeichnet, daß der Lichtleiter (22) ein Streifen mit rechteckförmigem Querschnitt ist, der an der einen großen Fläche an der Speicherschicht liegt und an dessen schmalen Stirnflächen je ein Fotohalbleiter (6) angeordnet ist.

2. Vorrichtung nach Anspruch 1, dadurch gekennzeichnet, daß der Fotohalbleiter (6) eine Fotodiode ist.

3. Vorrichtung nach Anspruch 1 oder 2, dadurch gekennzeichnet, daß der Lichtleiter (22) einen Fluoreszenzstoff als Wellenlängenschieber enthält.

4. Vorrichtung nach Anspruch 3, dadurch gekennzeichnet, daß der Wellenlängenschieber das einfallende Licht eines Argon-Lasers von 488 nm (blau) in Licht von 570 nm (gelb) umwandelt.

5. Vorrichtung nach Anspruch 3, dadurch gekennzeichnet, daß der Fluoreszenzstoff zur Gruppe der Dioxynaphtaldazin-Leuchtstoffe gehört.

6. Vorrichtung nach Anspruch 5, dadurch gekennzeichnet, daß der Leuchtstoff aus mit Europium (Eu) aktiviertem Barium (Ba) Mehrfachhalogenid (FClBr), z.B. BaFClBr:Eu, bzw. Lanthan (La) Oxibromid (OBr), das mit Terbium aktiviert ist, wie LaOBr:Tb, und der Lichtleiter aus Acryglas besteht.

7. Vorrichtung nach einem der Ansprüche 1 bis 6, dadurch gekennzeichnet, daß die Fotodioden (6) über Immersionsmittel (Öl, Kitt) an den Lichtleiter (22) angekoppelt sind.

## Revendications

1. Dispositif pour convertir des informations d'image contenues dans une couche-mémoire en une suite de signaux électriques, comprenant une aire de surface à laquelle sont coordonnés des moyens pour la fixation de la couche mémoire, ainsi qu'un rayon lumineux d'exploration (23) dirigé sur cette aire, le rayon explorateur (23) et l'aire de surface étant disposés de façon à pouvoir être déplacés mutuellement dans le sens de la longueur et transversalement, en vue d'une exploration ligne par ligne et du passage d'une ligne à la suivante, et l'aire d'exploration étant en liaison optique avec un convertisseur photoélectrique (6) par un conducteur de lumière (22), caractérisé en ce que le conducteur de lumière (22) est un ruban de section droite rectangulaire, qui est appliqué par une grande face contre la couche-mémoire et à chacune des petites faces d'extrémité duquel est coordonné un semi-conducteur photosensible (6).

2. Dispositif selon la revendication 1, caractérisé en ce que le semi-conducteur photosensible (6) est une photodiode.

3. Dispositif selon la revendication 1 ou 2, caractérisé en ce que le conducteur de lumière (22) contient une substance fluorescente en tant que décaleur de longueur d'onde.

4. Dispositif selon la revendication 3, caractérisé en ce que le décaleur de longueur d'onde transforme la lumière incidente d'un laser à l'argon de 488 nm (bleue) en lumière d'une longueur d'onde de 570 nm (jaune).

5. Dispositif selon la revendication 3, caractérisé en ce que la substance fluorescente appartient au groupe des substances luminescentes à base de dioxynaphtaldazine.

6. Dispositif selon la revendication 5, caractérisé en ce que la substance luminescente est formée d'un haloïde multiple (FClBr) de barium (Ba) activé à l'europium, par exemple de BaFClBr:Eu, ou d'oxybromure (OBr) de lanthane (La) activé au terbium, par exemple de LaOBr:Tb, et le conducteur de lumière est en verre acrylique.

7. Dispositif selon une des revendications 1 à 6, caractérisé en ce que les photodiodes (6) sont couplées au conducteur de lumière (22) par des agents d'immersion (huile, ciment).

## Claims

1. Device for translating the picture information contained in a memory layer into an electrical signal sequence, having a surface provided with means for attaching the memory layer, and a scanning light beam (23) directed at this surface, the scanning beam (23) and the surface being so disposed that they can be moved lengthwise and crosswise with respect to one another, in the direction of a line scanning and a line change, and the scan area being connected optically to a photo-electric transformer (6) by way of a light guide (22), characterised in that the light guide (22) is a strip of rectangular cross-section, which is located with one main surface thereof against the memory layer, and on each of whose narrow endfaces a photo-semiconductor (6) is arranged.

2. Device according to claim 1, characterised in that the photo-semiconductor (6) is a photodiode.

3. Device according to claim 1 or 2, characterised in that the light guide (22) contains a fluorescent material for wavelength shifting.

4. Device according to claim 3, characterised in that the material for shifting wavelengths converts the incident light of an argon laser at 488 nm (blue) into light at 570 nm (yellow).

5. Device according to claim 3, characterised in that the fluorescent material belongs to the group of dioxynaphthaldazine light materials.

6. Device according to claim 5, characterised in that the light material consists of barium (Ba) multiple halide (FClBr) activated with europium (Eu), for example BaFClBr:Eu, or Lanthanum (La) Oxybromide (OBr) which is activated with terbium, such as LaOBr:Tb, and the light guide consists of plexiglass.

7. Device according to one of the claims 1 to 6, characterised in that the photodiodes (6) are coupled to the light guide (22) by way of immersion media (oil, mastic).

FIG 1

FIG 2

FIG 3

FIG 4

FIG 5